# EUROPÄISCHE PATENTSCHRIFT

(11) **EP 3 568 254 B1**
(45) Veröffentlichungstag und Bekanntmachung des Hinweises auf die Patenterteilung: **24.08.2022**
(21) Anmeldenummer: 17800706.8
(22) Anmeldetag: 17.11.2017
(51) Int. Cl.: B23F 5/02, B23F 19/00

(54) **VERFAHREN ZUR HARTFEINBEARBEITUNG VON VERZAHNUNGEN, INSBESONDERE INNENVERZAHNUNGEN UND DAZU GEEIGNETE WERKZEUGMASCHINE**
METHOD FOR HARD FINISHING TOOTHED GEARING, PARTICULARLY INTERNALLY TOOTHED PORTIONS AND MACHINE TOOL SUITABLE THEREFOR
PROCÉDÉ D'USINAGE HAUTE PRÉCISION DE MATÉRIAUX DURS DE DENTURES, EN PARTICULIER DE DENTURES INTÉRIEURES ET MACHINE-OUTIL ADAPTÉE AUDIT PROCÉDÉ

(30) Priorität: 12.01.2017 DE 102017000260
(43) Veröffentlichungstag der Anmeldung: 20.11.2019
(73) Patentinhaber: Gleason-Pfauter Maschinenfabrik GmbH, 71636 Ludwigsburg (DE)
(72) Erfinder: SCHÄFERLING, Karl, 85716 Unterschleissheim (DE); BROGNI, Johannes, 3293 Dotzigen (CH)
(74) Vertreter: Leinweber & Zimmermann
(86) Internationale Anmeldenummer: PCT/EP2017/001358
(87) Internationale Veröffentlichungsnummer: WO 2018/130260

(56) Entgegenhaltungen:
- EP-A1- 2 745 970
- EP-A1- 3 034 220
- EP-A1- 3 075 481
- WO-A1-2014/192672
- DE-C- 975 164
- JÖRG SCHIEKE: "Aussermittiges Bearbeiten ohne Abweichungen Reduzierte Investitions- und Stückkosten durch Wälzschälen", WERKSTATT + BETRIEB, CARL HANSER VERLAG, MÜNCHEN DE, Bd. 147, Nr. 6, 1. Juni 2014 (2014-06-01), Seiten 46-48, XP001591125, ISSN: 0043-2792

## Beschreibung

Die Erfindung betrifft ein Verfahren zur Hartfeinbearbeitung von Verzahnungen, insbesondere Innenverzahnungen, gemäß dem Oberbegriff des unabhängigen Anspruchs 1 und eine dazu ausgelegte Werkzeugmaschine gemäß dem Oberbegriff des Anspruchs 15, sowie ein Hartfeinbearbeitungswerkzeug gemäß dem Oberbegriff des Anspruchs 16. Ein derartiges Verfahren, eine derartige Werkzeugmaschine und ein derartiges Hartfeinbearbeitungswerkzeug sind aus dem Dokument EP 3 034 220 A1 bekannt.

Bekannterweise werden Verzahnungen nach dem Härten durch eine Hartfeinbearbeitung in ihre vorgegebene Soll-Endgeometrie gebracht. Dabei wird ein noch vorhandenes Aufmaß durch einen abrasiven Bearbeitungseingriff abgetragen, z.B. durch einen Schleifprozess. Dazu sind das Profilschleifen oder auch das Wälzschleifen als bekannte Verfahren zu nennen.

Bei der Hartfeinbearbeitung von Innenverzahnungen stehen nicht sämtliche Bearbeitungsalternativen zur Verfügung, da durch die Innenverzahnung topologische Randbedingungen vorgegeben sind, die beispielsweise den Einsatz längerer Schleifschnecken unmöglich machen. In T. Bausch "Innovative Zahnradfertigung", 3. Auflage, ist auf Seite 579 in Bild 15.5-11(B) das Schleifen einer Innenverzahnung mit einer Profilschleifmaschine dargestellt. Aus dieser Darstellung ist das oben erläuterte Platzproblem nochmals gut erkennbar.

Im einleitenden Beschreibungsteil der EP 3 034 220 A1 wird u.a. auf die DE 10 2010 021 749 A1 als ein bekanntes Verfahren zum Schleifen von auch Innenverzahnungen hingewiesen, sowie auf die WO 2014/192672 A1. Gemäß der Lehre der EP 3 034 220 A1 soll ein Abtrag durch fortlaufende Relativbewegung der Zähne von Schleifwerkzeug in den Zwischenräumen der Verzahnung des Werkstücks geschliffen werden, wobei die Geschwindigkeit der Relativbewegung größer als beim Wälzschälen und/oder größer als 300 m/min, insbesondere größer als 400 m/min, ganz Insbesondere größer als 500 m/min sein soll. Es sollen dabei windschiefe Achsen zum Einsatz kommen, und Schleifwerkzeuge können als Stirnrad ausgebildet sein, wobei der Zahnkopfdurchmesser wie auch der Zahnfußdurchmesser über die Zahnbreite abnehmen können, um Freiwinkel zu realisieren, was alternativ aber auch durch Einstellung der Drehachsen relativ zueinander erreicht werden könnte.

DE 975164 C offenbart ein modifiziertes Schabverfahren und Läppen. EP 3 075 481 A1 offenbart ein modifiziertes Wälzschälverfahren.

Der Erfindung liegt die Aufgabe zugrunde, ein Hartfeinbearbeitungsverfahren der eingangs genannten Art weitergehend zu verbessern, insbesondere im Hinblick auf eine längere Standzeit des Hartfeinbearbeitungswerkzeugs.

Diese Aufgabe wird in verfahrenstechnischer Hinsicht durch ein Verfahren gemäß Anspruch 1 zur Hartfeinbearbeitung von Verzahnungen, insbesondere Innenverzahnungen gelöst, das im Wesentlichen dadurch gekennzeichnet ist, dass man ein verzahntes, um seine Drehachse rotierendes Hartfeinbearbeitungswerkzeug in einem Durchgang oder in mehreren Durchgängen unterschiedlicher radialer Zustelltiefe unter einer Vorschubbewegung mit einer zur Drehachse der bearbeiteten Verzahnung parallelen Richtungskomponente und unter einem von Null verschiedenen Achskreuzwinkel in wälzenden Bearbeitungseingriff mit der bearbeiteten Verzahnung bringt und mit einem abrasiven Zahnflankenbereich der Werkzeugverzahnung mit von der der bearbeiteten Verzahnung zugewandten Stirnseite in Flankenlinienrichtung ansteigender Zahndicke Material von der bearbeiteten Verzahnung abträgt.

Mit dem erfindungsgemäßen Verfahren wird erreicht, dass ein in Axialrichtung des Werkzeugs gesehen größerer Bereich an der Abtragleistung der Hartfeinbearbeitung teilhat, was zu einer gleichmäßigeren Abnutzung des Werkzeugs und somit zu dessen längerer Standzeit führt.

In einer besonders bevorzugten Gestaltung weist der Zahnflankenbereich ansteigender Zahndicke wenigstens zu Beginn einen Abschnitt ansteigender Zahnhöhe auf. Dies schafft günstige geometrische Bedingungen für den Bearbeitungseingriff.

In einer weiteren bevorzugten Verfahrensgestaltung wird zwischen zwei Durchgängen die Zustelltiefe in einem Maße geändert, in welchem ein halber Zahndickenunterschied des abtragenden Zahnflankenbereichs um nicht mehr als 10% überschritten wird und welches insbesondere nicht größer ist als der halbe Zahndickenunterschied und/oder nicht kleiner ist als 40%, insbesondere nicht kleiner als 30% des Zahndickenunterschieds. Dies schafft zum einen günstige Eingriffsbedingungen, zum anderen kann dadurch der Abtrag des insgesamt abzutragenden Gesamtaufmaßes mit einer nicht zu hohen Zahl von Durchgängen erreicht werden.

In einer weiter als vorteilhaft angesehenen Ausführungsform beträgt das Verhältnis aus dem Zahndickenunterschied der Länge des abtragenden Zahnflankenbereichs ansteigender Zahndicke in Flankenlinienrichtung wenigstens 1/200, bevorzugt wenigstens 1/150, weiter bevorzugt wenigstens 1/100 und insbesondere höchstens 1/20, bevorzugt höchstens 1/30, insbesondere höchstens 1/40. Daraus ergibt sich eine günstige Kombination aus der Werkzeugstandzeit und dem für die Hartfeinbearbeitung erforderlichen Zeitbedarf.

In einer weiteren bevorzugten Gestaltung des Verfahrens beträgt die Länge des abtragenden Zahnflankenbereichs ansteigender Zahndicke in Flankenlinienrichtung wenigstens 1x m, bevorzugt wenigstens 2x m, weiter bevorzugt wenigstens 4x m und insbesondere wenigstens 6x m, wobei m das Modul der Werkzeugverzahnung ist. Hier wird eine gute Kombination aus der angestrebten hohen Werkzeugstandzeit mit der dynamischen Steifigkeit des Werkzeugs im Bearbeitungseingriff erreicht.

In einer besonders bevorzugten Ausführungsform schließt an den Zahnflankenbereich ansteigender Zahndicke in Zahnflankenrichtung ein Zahnflankenbereich gleichbleibender oder absteigender Zahndicke an. Hierdurch wird die Stabilität des Werkzeugs erhöht und zudem ein glättender Eingriff bei dem Niveau des in dem entsprechenden Bearbeitungsdurchgang erreichten Aufmaßes erreicht, der im letzten Durchgang die Endgeometrie darstellen wird.

In einer nochmals weiter bevorzugten Gestaltung ist in Vorschubrichtung hinter dem Bereich ansteigender Zahndicke insbesondere an der abgewandten Stirnseite ein Bereich absteigender Zahndicke gebildet.

In einer besonders bevorzugten Verfahrensgestaltung arbeitet man im letzten Durchgang gegenüber dem vorletzten Durchgang mit verringerter Zustelltiefenänderung und/oder Vorschubgeschwindigkeit. Dies ermöglicht einen schlichtenden letzten Durchgang ohne Austausch des Schleifwerkzeugs gegenüber ein speziell ausgelegtes Schlichtwerkzeug.

Besonders geeignet erweist sich das Verfahren für in [mm] gemessene Module m der Werkzeugverzahnung von wenigstens 0,4, bevorzugt wenigstens 0,7, insbesondere wenigstens 1 und/oder 8, bevorzugt höchstens 6, insbesondere höchstens 4.

Hinsichtlich der Achsgeometrie ist besonders bevorzugt ein Achskreuzwinkel von wenigstens 1°, bevorzugt wenigstens 2°, insbesondere wenigstens 3° vorgesehen, dieser sollte aber bevorzugt höchstens 45°, besonders bevorzugt höchstens 22°, insbesondere höchstens 18° betragen. Auf diese Weise werden geeignete kinematische Bedingungen für den Bearbeitungseingriff erreicht.

Dabei kann insbesondere vorgesehen werden, dass die Drehzahl des Werkstücks wenigstens 40, bevorzugt wenigstens 400, insbesondere wenigstens 800 U/min beträgt, und/oder höchstens 7.000, bevorzugt höchstens 5.600, insbesondere 4.800 U/min. Dies stellt einen guten Kompromiss für eine akzeptable hohe Abtragsleistung bei verminderter Schleifbrandgefahr dar.

In diesem Zusammenhang ist bevorzugt auch vorgesehen, dass die Vorschub-Geschwindigkeit in mm pro Werkstückdrehung in wenigstens einem, insbesondere mehreren Durchgängen höchstens 0,2, bevorzugt höchstens 0,15 und/oder wenigstens 0,01, bevorzugt wenigstens 0,02, weiter bevorzugt wenigstens 0,04 und insbesondere wenigstens 0,06 beträgt.

Die Gestaltung der Werkzeugoberfläche kann einheitlich sein, in einer bevorzugten Ausgestaltung ist jedoch die abrasive Oberfläche wenigstens in einem Abschnitt des abtragenden Zahnflankenbereichs nahe der bearbeiteten Verzahnung zugewandten Stirnseite unterschiedlich gestaltet als ein hinter dem Zahnflankenbereich ansteigender Zahndicke gelegener Abschnitt, insbesondere in Form einer nahe der der bearbeiteten Verzahnung zugewandten Stirnseite gröberen Körnung eines Abrasivbelages. Es kann somit der Belag an die Werkzeugzonen unterschiedlicher Belastung im Bearbeitungseingriff geeignet angepasst sein.

Die Art der Form des Anstiegs hinsichtlich des Anstiegs in der Zahndicke und/oder dem Kopfkreisdurchmesser ist bevorzugt ballig, insbesondere mit von der der bearbeiteten Verzahnung zugewandten Stirnseite über die Flankenlinienrichtung abnehmender Krümmung. Damit lassen sich günstige Arbeitsergebnisse hinsichtlich einer Kombination aus Werkzeugstandzeit und Qualität der Hartfeinbearbeitung erzeugen.

In vorrichtungstechnischer Hinsicht schlägt die Erfindung vor eine Werkzeugmaschine gemäß Anspruch 15 zur Hartfeinbearbeitung von Verzahnungen, mit einer drehbaren Aufspannung für ein Werkstück mit einer zur Bearbeitung vorgesehenen Verzahnung, insbesondere Innenverzahnung, einer drehangetriebenen Aufspannung für ein eine Verzahnung aufweisendes Hartfeinbearbeitungswerkzeug, mit Bewegungsachsen zur Realisierung einer radialen Zustellbewegung zwischen Werkstück und Werkzeug, zur die Vorschubbewegung mit einer zur Drehachse der bearbeiteten Verzahnung parallelen Richtungskomponente realisierenden Relativbewegung zwischen Werkstück und Werkzeug, und einer Drehachse zur Einstellung eines von Null verschiedenen Achskreuzwinkels zwischen Werkzeug- und Werkstückachse, sowie einer Steuereinrichtung, welche Steueranweisungen enthält, die die Maschine zur Ausführung eines Verfahrens nach einem der vorangegangenen Verfahrensaspekte steuert.

Ein derartige Steueranweisungen enthaltendes Steuerprogramm wird zudem auch als eigenständig schutzfähig offenbart.

Zudem schlägt die Erfindung ein mit einer Verzahnung versehenes, um seine Drehachse rotierbares Hartfeinbearbeitungswerkzeug gemäß Anspruch 16 vor, das einen abrasiven Zahnflankenbereich mit von einer in Bearbeitung einer zu bearbeitenden Verzahnung zugewandten Stirnseite im Flankenlinienbereich ansteigenden Zahndicke aufweist. Das Hartfeinbearbeitungswerkzeug kann zudem eines oder mehrere der oben anhand der Verfahrensansprüche erläuterten Merkmale aufweisen.

Weitere Einzelheiten, Merkmale und Vorteile der Erfindung ergeben sich aus der nachfolgenden Beschreibung mit Bezug auf die beigefügten Figuren, von denen
Fig. 1 ein Werkzeug und Werkstück in einer perspektivischen Ansicht zeigt,
Fig. 2 das Werkzeug und Werkstück in einer Darstellung zeigt, bei der die Papierebene die Normalenebene des Gemeinlots auf die jeweiligen Drehachsen ist,
Fig. 3 das Werkzeug alleinstehend in einer perspektivischen Ansicht zeigt,
Fig. 4 einen Zahndickenverlauf für den Fall eines geradverzahnten Werkzeugs zeigt,
Fig. 5 in einer vereinfachten Axialschnittdarstellung den Abtragmechanismus des Werkzeugs zeigt, und
Fig. 6 in schematischer Weise einen Verzahnungsmaschinenaufbau zeigt.

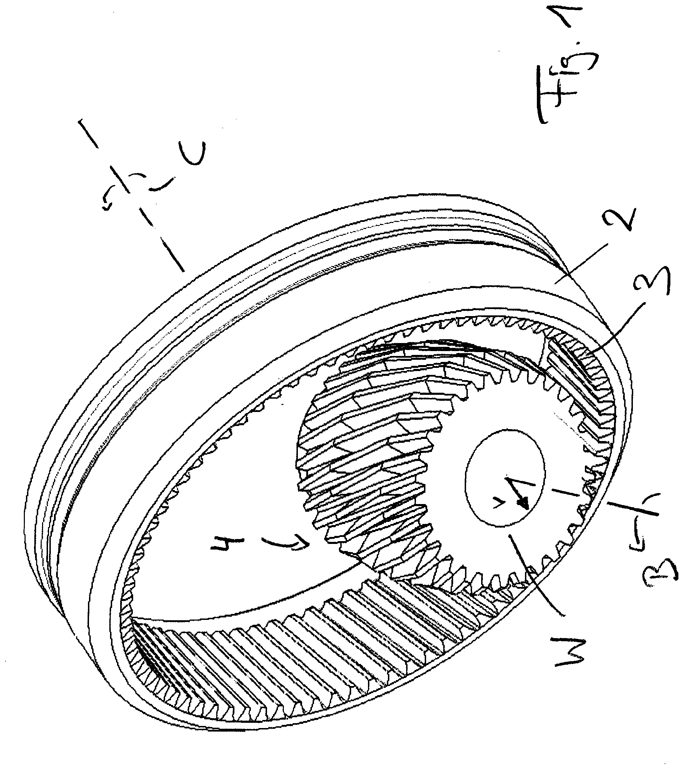

In Fig. 1 ist ein außenverzahntes Werkzeug W in einer perspektivischen Darstellung in Eingriff mit einem innenverzahnten Werkstück 2 dargestellt. Die Innenverzahnung 3 des Werkstücks 2 wird durch die Verzahnung 4 des Werkzeugs W einer abrasiven Hartfeinbearbeitung unterzogen.

Bei dem Werkzeug W handelt es sich in dem Ausführungsbeispiel um ein CBN-beschichtetes, schrägverzahntes Werkzeug, es sind jedoch andere Varianten denkbar, wie z.B. Geradverzahnungen und/oder diamantbeschichtete Räder.

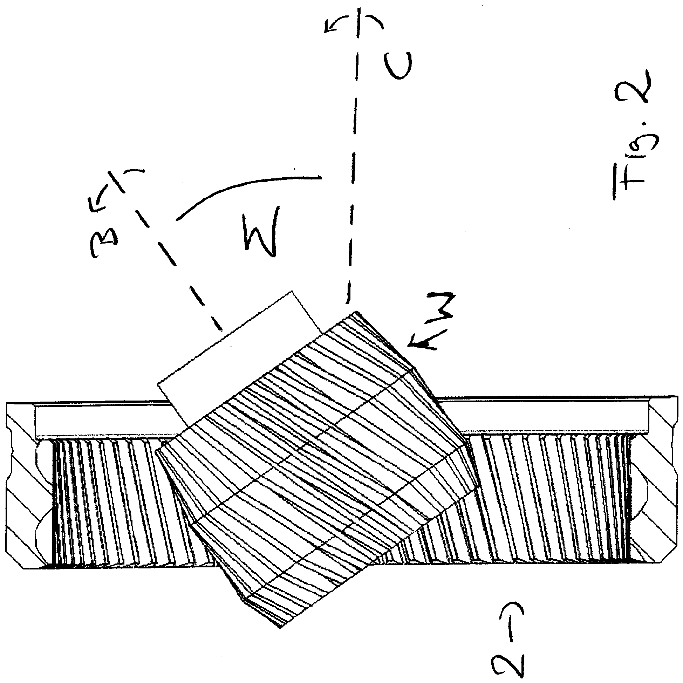

Des Weiteren ist ersichtlich, dass die Drehachsen C des Werkstücks 2 und B des Werkzeugs W in einer windschiefen Lage zueinander stehen und miteinander einen Achskreuzwinkel Σ einschließen, wie besser aus Fig. 2 erkennbar ist. Die Bearbeitung erfolgt in einer oder bevorzugt mehreren Stufen mit jeweils tiefergehender radialer Zustellung und unter einer Vorschubbewegung, die in diesem Ausführungsbeispiel parallel zur Drehachse C des Werkstücks 2 verläuft und in der Darstellung in Fig. 1 durch den Pfeil mit Bezugszeichen v dargestellt ist.

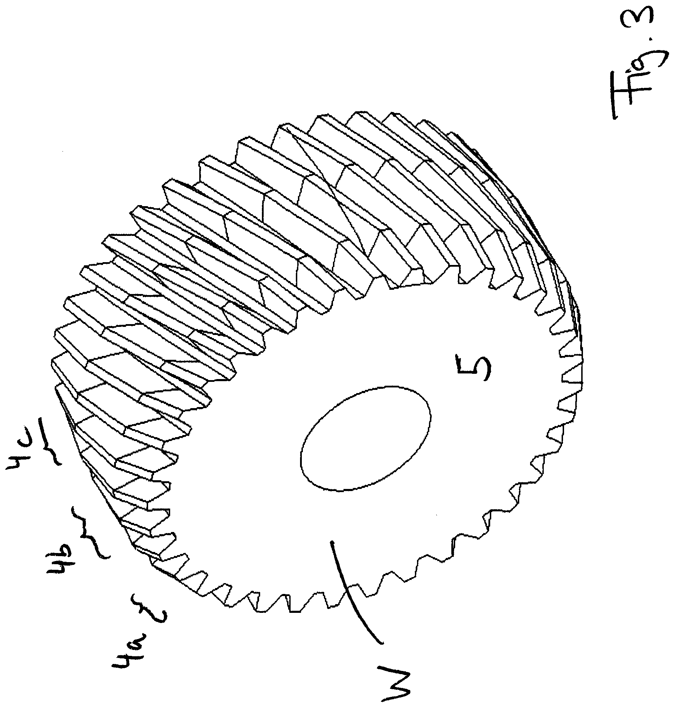

Wie besser aus Fig. 3 ersichtlich ist, in der das Werkzeug W alleinig dargestellt ist, ist die Verzahnung 4 des Werkzeugs W in Axialrichtung gesehen in drei Bereiche 4a, 4b, 4c unterschiedlicher Gestalt seiner Verzahnung unterteilt. In dem Bereich 4a steigt die Zahndicke der Verzahnung 4 von der bezüglich der Vorschubrichtung vorderen Stirnseite 5 in Richtung auf die andere Stirnseite an, um in einem mittleren Bereich 4b konstant zu sein und im hinteren Bereich 4c wieder abzufallen. Einen diesbezüglich ähnlichen Verlauf nimmt auch der Kopfkreisdurchmesser, nämlich im Bereich 4a ansteigend, im Bereich 4b gleichbleibend und im Bereich 4c abfallend.

An dieser Stelle sei angemerkt, dass die Abweichungen der Zähne in den Bereichen 4a, 4b, 4c von einer gleichmäßigen Form sehr stark übertrieben dargestellt sind. In tatsächlichen Anwendungen mögen diese Unterschiede mit bloßem Auge kaum erkennbar sein.

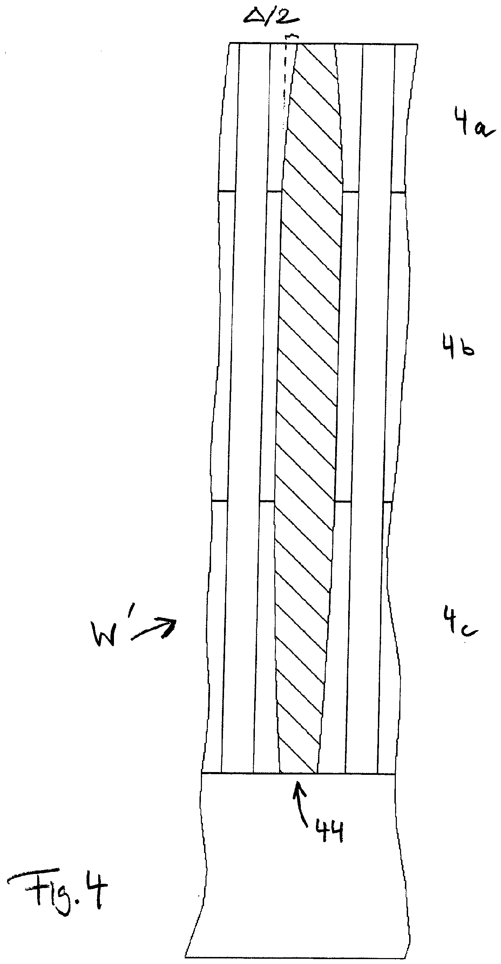

In Fig. 4 ist eine Ansicht gezeigt, in der der Verlauf der Zahndicke in den Bereichen 4a, 4b, 4c nochmals besser erkennbar ist, aus Gründen der einfacheren Darstellung für ein gradverzahntes Werkzeug W'. Dargestellt ist ein Schnitt durch einen Zahn 44, bei dem die Schnittfläche auf dem Teilkreis liegt. Ebenfalls eingezeichnet ist jeweils an linker und rechter Flanke der halbe Zahndickenunterschied Δ/2 zwischen dem Bereich geringster Zahndicke an der Stirnseite 5 bis zum Übergang zwischen dem Bereich 4a und dem Bereich 4b.

Des Weiteren ist in Fig. 4 eine bevorzugte Art der ansteigenden Zahndicke dargestellt, nämlich in Form einer Balligkeit. Die Art könnte jedoch auch von konischer Art oder auch mit unterschiedlichen Balligkeitsverläufen sein.

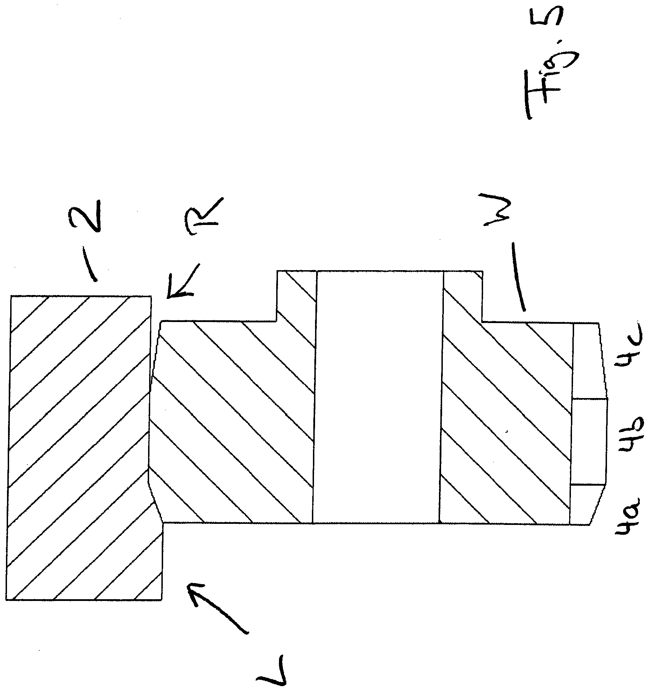

Nachstehend wird der Abtragemechanismus anhand der Schemazeichnung von Fig. 5 erläutert. Der Bereich L links des Werkstücks 2 steht für die Verzahnung 3 des Werkstücks 2 mit nach einem Aufmaß z.B. von der angestrebten Endform der Verzahnung 3 (bzw. vor der n-ten Hartfeinbearbeitungsstufe, wenn der schematisch dargestellte Eingriff des Werkzeugs W der n-te Durchgang der Hartfeinbearbeitung ist). Auf der in Fig. 5 rechten Seite R ist am Werkstück 2 dagegen die Aufmaßsituation nach dem dargestellten Hartfeinbearbeitungsdurchgang dargestellt (bzw. der mit der Hartfeinbearbeitung angestrebte Endzustand, wenn es sich bei dem dargestellten Durchgang um den letzten Bearbeitungsdurchgang handelt).

Man erkennt, dass der das Aufmaß verändernde Bearbeitungseingriff im Wesentlichen durch den Bereich 4a des Werkstücks W bewirkt wird. Der mittlere Bereich 4b hat dagegen primär eine glättende Wirkung, und im hinteren Bereich 4c wird der Bearbeitungskontakt gelöst (clearance section).

Nutzt man, wie in Fig. 5 dargestellt ist, die Abtragmöglichkeit des als Grobschnittabschnitt wirkenden Bereichs 4a ansteigender Zahnbreite, die man als Rampe ansehen kann, voll aus, so entspricht dem halben Zahndickenunterschied Δ/2 dem in der gewählten Maschinenachseinstellung (Achskreuzwinkel Σ) erreichbaren Abtrag (d.h. Aufmaßunterschied zwischen vor und nach dem jeweiligen Hartfeinbearbeitungsdurchgang). Die Abtragleistung muss nicht von der Zahnkante an der Stirnseite 5 getragen werden, vielmehr verteilt sie sich über die (in Zahnbreitenrichtung gesehen) Länge der Rampe, also des Bereichs 4a ansteigender Zahndicke.

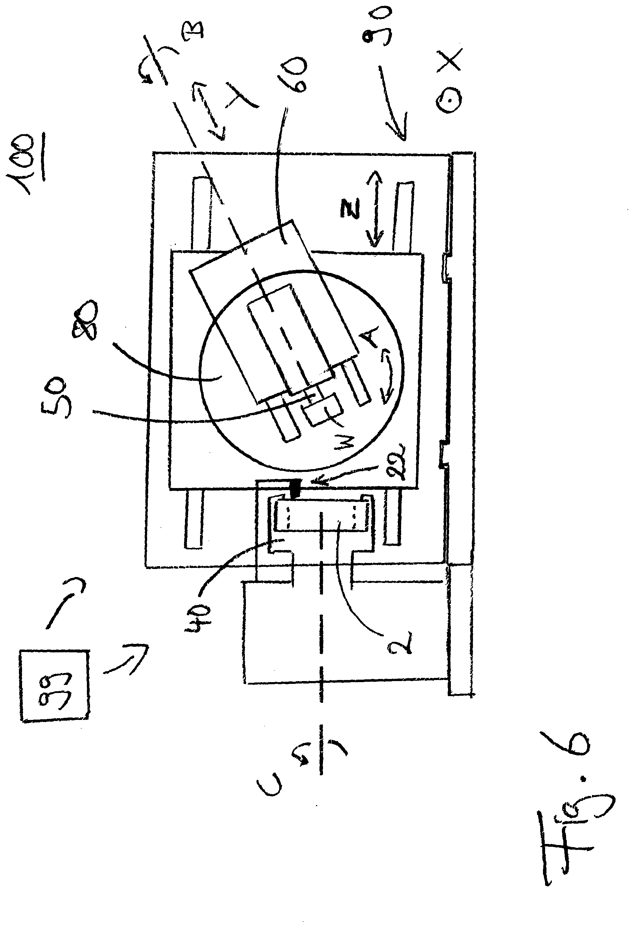

In Fig. 6 ist auf schematischer Basis eine Verzahnungsmaschine 100 mit den werkstückseitigen und werkzeugseitigen Maschinenachsen dargestellt, auf der sich das Hartbearbeitungsverfahren ausführen lässt.

Werkstückseitig ist das innenverzahnte Werkstück 2 in einer dafür geeigneten Werkstückspindel 40 gehalten und über einen nicht dargestellten Antrieb um seine Drehachse C drehbar antreibbar. Das Werkzeug W ist werkzeugseitig auf eine Werkstückspindel 50 gespannt. Die Werkzeugspindel 50 ist auf einem Tangentialschlitten 60 angeordnet, dessen Linearbewegungsachse parallel zur Drehachse B des Werkzeugs verläuft, und der an einem Drehträger 80 angeordnet ist. Der Drehträger 80 ist wiederum auf einer Kreuzschlittenanordnung 90 gelagert. Diese weist Bewegungsachsen Z, X auf, wobei die Bewegungsachse Z parallel zur Werkstückspindelachse C verläuft und als Vorschubachse einsetzbar ist, wohingegen die Bewegungsachse X senkrecht auf der durch die Drehachsen C, B aufgespannten Ebene steht und als radiale Zustellachse dient. Mit der Maschinendrehachse A des Drehträgers wird durch Drehung um die Zustellachse X der Achskreuzwinkel Σ einstellbar.

Es versteht sich, dass die Maschine 100 eine Steuerung 99 aufweist, die die zur Steuerung des Verfahrens erforderlichen Steuerbefehle zur Bewegungssteuerung der Maschinenachsen enthält. Diese erfolgt CNC-gesteuert, vorzugsweise unter Verwendung von Direktantrieben für die Maschinenachsen, wobei auch indirekte Antriebe denkbar sind.

Mit dem Bezugszeichen 22 ist noch ein einschwenkbarer Einmittsensor dargestellt, mit dem die Winkellage der Innenverzahnung 3 des eingespannten Werkstücks 2 in einer Einmittoperation bestimmt werden kann, um die Drehachsen B, C für den phasenrichtigen wälzenden Bearbeitungseingriff zwischen Werkzeug W und Werkstück 2 zu synchronisieren.

Insbesondere bei Werkstücken, die eine Schulter aufweisen, wird es bevorzugt, dass insbesondere bei den letzten und tiefsten Durchgängen eine radiale Rückholbewegung einsetzt, auch wenn die Werkstückverzahnung noch keine Aufmaßverringerung in voller Verzahnungsbreite erfahren hat.

Als ein konkretes Ausführungsbeispiel könnte man beispielsweise für eine Innenverzahnung mit 70 Zähnen und einem Modul von 1,00 mm als Hartfeinbearbeitungsparameter mit einem Achskreuzwinkel von 9,5° und einer Vorschubgeschwindigkeit von 0,03 mm pro Werkstückdrehung arbeiten und das Gesamtaufmaß in insgesamt vier Durchgängen abtragen. Dies stellt jedoch lediglich ein Beispiel dar, und andere Parameter können im Einklang mit den oben erläuterten bevorzugten Bereichen herangezogen werden.

Demnach ist die Erfindung nicht auf die vorgenannten Ausführungsbeispiele eingeschränkt.

## Patentansprüche

1. Verfahren zur Hartfeinbearbeitung von Verzahnungen, insbesondere Innenverzahnungen (3), bei dem man ein verzahntes, um seine Drehachse rotierendes Hartfeinbearbeitungswerkzeug (W) in einem Durchgang oder in mehreren Durchgängen unterschiedlicher radialer Zustelltiefe unter einer Vorschubbewegung mit einer zur Drehachse (C) der bearbeiteten Verzahnung parallelen Richtungskomponente und unter einem von Null verschiedenen Achskreuzwinkel (Σ) in wälzenden Bearbeitungseingriff mit der bearbeiteten Verzahnung bringt, **dadurch gekennzeichnet, dass** das Hartfeinbearbeitungswerkzeug (W) mit einem abrasiven Zahnflankenbereich (4a) der Werkzeugverzahnung (4) mit von der der bearbeiteten Verzahnung zugewandten Stirnseite (5) in Flankenlinienrichtung ansteigender Zahndicke Material von der bearbeiteten Verzahnung abträgt.

2. Verfahren nach Anspruch 1, bei dem der Zahnflankenbereich (4a) ansteigender Zahndicke wenigstens zu Beginn einen Abschnitt ansteigender Zahnhöhe aufweist.

3. Verfahren nach Anspruch 1 oder 2, bei dem zwischen zwei Durchgängen die Zustelltiefe in einem Maße geändert wird, in welchem ein halber Zahndickenunterschied (Δ/2) des abtragenden Zahnflankenbereichs um nicht mehr als 10% überschritten wird und welches insbesondere nicht größer ist als der halbe Zahndickenunterschied und/oder nicht kleiner ist als 40%, insbesondere nicht kleiner ist als 30% des Zahndickenunterschieds.

4. Verfahren nach einem der vorhergehenden Ansprüche, bei dem das Verhältnis aus dem Zahndickenunterschied und der Länge des abtragenden Zahnflankenbereichs ansteigender Zahndicke in Flankenlinienrichtung wenigstens 1/200 beträgt, bevorzugt wenigstens 1/150, weiter bevorzugt wenigstens 1/100 und insbesondere höchstens 1/20, bevorzugt höchstens 1/30, insbesondere höchstens 1/40.

5. Verfahren nach einem der vorhergehenden Ansprüche, bei dem die Länge des abtragenden Zahnflankenbereichs ansteigender Zahndicke in Flankenlinienrichtung wenigstens 1×m beträgt, bevorzugt wenigstens 2xm, weiter bevorzugt wenigstens 4xm und insbesondere wenigstens 6xm beträgt, wobei m das Modul der Werkzeugverzahnung (4) ist.

6. Verfahren nach einem der vorhergehenden Ansprüche, bei dem an dem Zahnflankenbereich ansteigender Zahndicke in Zahnflankenrichtung ein Zahnflankenbereich (4b) gleichbleibender oder absteigender Zahndicke anschließt.

7. Verfahren nach einem der vorhergehenden Ansprüche, bei dem in Vorschubrichtung hinter dem Bereich ansteigender Zahndicke insbesondere an der abgewandten Stirnseite ein Bereich (4c) absteigender Zahndicke gebildet ist.

8. Verfahren nach einem der vorhergehenden Ansprüche, mit einer im letzten Durchgang gegenüber dem vorletzten Durchgang verringerter Zustelltiefenänderung und/oder Vorschub-Geschwindigkeit.

9. Verfahren nach einem der vorhergehenden Ansprüche, mit einem in [mm] gemessenen Modul m der Werkzeugverzahnung von wenigstens 0,4, bevorzugt wenigstens 0,7, insbesondere wenigstens 1, und/oder höchstens 8, bevorzugt höchstens 6, insbesondere höchstens 4.

10. Verfahren nach einem der vorhergehenden Ansprüche, bei dem der Achskreuzwinkel wenigstens 1°, bevorzugt wenigstens 2°, insbesondere wenigstens 3° beträgt und/oder er höchstens 45°, bevorzugt höchstens 22°, insbesondere höchstens 18° beträgt.

11. Verfahren nach einem der vorhergehenden Ansprüche, bei dem die Drehzahl des Werkstücks wenigstens 40, bevorzugt wenigstens 400, insbesondere wenigstens 800 U/min beträgt, und/oder höchstens 7000, bevorzugt höchstens 5600, insbesondere höchstens 4800 U/min.

12. Verfahren nach einem der vorhergehenden Ansprüche, bei dem die Vorschub-Geschwindigkeit in mm pro Werkstückdrehung in wenigstens einem, insbesondere mehreren Durchgängen höchstens 0,2, bevorzugt höchstens 0,15 und/oder wenigstens 0,01, bevorzugt wenigstens 0,02, weiter bevorzugt wenigstens 0,04, insbesondere wenigstens 0,06 beträgt.

13. Verfahren nach einem der vorhergehenden Ansprüche, bei dem die abrasive Oberfläche wenigstens in einem Abschnitt des abtragenden Zahnflankenbereichs nahe der der bearbeiteten Verzahnung zugewandten Stirnseite unterschiedlich gestaltet ist wie ein hinter dem Zahnflankenbereich ansteigender Zahndicke gelegener Abschnitt, insbesondere mit einer gröberen Körnung eines Abrasivbelages.

14. Verfahren nach einem der vorhergehenden Ansprüche, bei dem die Art des Anstiegs ballig ist, insbesondere mit von der der bearbeiteten Verzahnung zugewandten Stirnseite über die Flankenlinienrichtung abnehmender Krümmung.

15. Werkzeugmaschine zur Hartfeinbearbeitung von Verzahnungen, mit einer drehbaren Aufspannung für ein Werkstück mit einer zur Bearbeitung vorgesehenen Verzahnung, insbesondere Innenverzahnung (3), einer drehangetriebenen Aufspannung für ein eine Verzahnung aufweisendes Hartfeinbearbeitungswerkzeug (W), mit Bewegungsachsen zur Realisierung einer radialen Zustellbewegung (X) zwischen Werkstück und Werkzeug, zur die Vorschubbewegung mit einer zur Drehachse der bearbeiteten Verzahnung parallelen Richtungskomponente realisierenden Relativbewegung (Z) zwischen Werkstück und Werkzeug, und einer Drehachse (A) zur Einstellung eines von Null verschiedenen Achskreuzwinkels zwischen Werkzeug- und Werkstückachse, **dadurch gekennzeichnet, dass** die Werkzeugmaschine eine Steuereinrichtung aufweist, welche Steueranweisungen enthält, die die Maschine zur Ausführung eines Verfahrens nach einem der Ansprüche 1 bis 14 steuert.

16. Mit einer Verzahnung versehenes, um seine Drehachse (B) rotierbares Hartfeinbearbeitungswerkzeug (W), **dadurch gekennzeichnet, dass** das Hartfeinbearbeitungswerkzeug (W) einen abrasiven Zahnflankenbereich (4a) mit von einer in Bearbeitung einer zu bearbeitenden Verzahnung zugewandten Stirnseite in Flankenlinienrichtung ansteigenden Zahndicke aufweist, und das insbesondere die weiteren in den Kennzeichen der Ansprüche 2, 4 bis 7, 9, 13 und/oder 14 enthaltenen Merkmale aufweist.

## Claims

1. A method for hard-finishing teeth, in particular internal teeth (3), wherein a toothed hard-finishing tool (W) which rotates around its axis of rotation is brought into rolling machining engagement with the machined teeth in one or several passes of different radial infeed depth by a feed movement having a directional component that is parallel with the axis of rotation (C) of the machined teeth and at an axis intersection angle (Σ) that differs from zero, **characterised in that** the hard-finishing tool (W) removes material from the machined teeth using an abrasive tooth flank region (4a) of the tool teeth (4) having a tooth thickness that increases in a tooth trace direction from an end face (5) facing the machined teeth,.

2. The method in accordance with claim 1, wherein the tooth flank region (4a) of increasing tooth thickness comprises, at least at the start of the region, a portion of increasing tooth height.

3. The method in accordance with claim 1 or 2, wherein the infeed depth varies from pass to pass to such an extent that half a tooth thickness difference (Δ/2) of the material-removing tooth flank region is exceeded by no more than 10%, and in particular to an extent that is no greater than half a tooth thickness difference and/or no less than 40%, in particular no less than 30% of the tooth thickness difference.

4. The method in accordance with one of the preceding claims, wherein the ratio of the tooth thickness difference and the length of the material-removing tooth flank region of increasing tooth thickness in the tooth trace direction is at least 1/200, preferably at least 1/150, even more preferably 1/100 and in particular no more than 1/20, preferably no more than 1/30, in particular no more than 1/40.

5. The method in accordance with one of the preceding claims, wherein the length of the material-removing tooth flank region of increasing tooth thickness in the tooth trace direction is at least 1×m, preferably at least 2×m, even more preferably at least 4×m and in particular at least 6×m, wherein m is the module of the tool teeth (4).

6. The method in accordance with one of the preceding claims, wherein a tooth flank region (4b) of constant or decreasing tooth thickness adjoins the tooth flank region of increasing tooth thickness in the tooth trace direction.

7. The method in accordance with one of the preceding claims, wherein a region (4c) of decreasing tooth thickness is formed behind the region of increasing tooth thickness, as seen in the feed direction, in particular on the end face facing away from the teeth.

8. The method in accordance with one of the preceding claims, having a reduced change in infeed depth and/or a reduced feed rate in the last pass in relation to the penultimate pass.

9. The method in accordance with one of the preceding claims, having a module m, measured in [mm], of the tool teeth of at least 0.4, preferably at least 0.7, in particular at least 1, and/or no more than 8, preferably no more than 6, in particular no more than 4.

10. The method in accordance with one of the preceding claims, wherein the axis intersection angle is at least 1°, preferably at least 2°, in particular at least 3° and/or is no more than 45°, preferably no more than 22°, in particular no more than 18°.

11. The method in accordance with one of the preceding claims, wherein the tool rotates at a speed of at least 40 rpm, preferably at least 400 rpm, in particular at least 800 rpm, and/or no more than 7000 rpm, preferably no more than 5600 rpm, in particular no more than 4800 rpm.

12. The method in accordance with one of the preceding claims, wherein the feed rate in mm per workpiece rotation in at least one pass, in particular several passes, is no more than 0.2, preferably no more than 0.15 and/or at least 0.01, preferably at least 0.02, even more preferably at least 0.04, in particular at least 0.06.

13. The method in accordance with one of the preceding claims, wherein the abrasive surface at least in a portion of the material-removing tooth flank region near the end face facing the machined teeth is formed differently to a portion located behind the tooth flank region of increasing tooth thickness, in particular with an abrasive coating with a coarser grain.

14. The method in accordance with one of the preceding claims, wherein the type of increase is spherical, in particular having a curvature which decreases over the tooth trace direction from the end face facing the machined teeth.

15. A machine tool for hard-finishing teeth, said machine comprising: a rotatable clamping means for a workpiece having teeth to be machined, in particular internal teeth (3); a rotationally driven clamping means for a hard-finishing tool (W) having teeth, comprising axes of movement for implementing a radial feed movement (X) between the workpiece and tool, for the relative movement (Z) between the workpiece and tool which implements the feed movement having a directional component that is parallel with the axis of rotation of the machined teeth; and an axis of rotation (A) for setting an axis intersection angle that differs from zero between the tool axis and workpiece axis, **characterised in that** the machine tool comprises a control device which contains control instructions that control the machine in order to carry out a method in accordance with one of claims 1 to 14.

16. A hard-finishing tool (W) provided with teeth and rotatable around its axis of rotation (B), **characterised in that** the hard-finishing tool (W) comprises an abrasive tooth flank region (4a) having an increasing tooth thickness in the tooth trace direction from an end face facing, during machining, the teeth to be machined, and **in that** the hard-finishing tool in particular comprises the further features contained in the characteristics specified in claims 2, 4 to 7, 9, 13 and/or 14.

## Revendications

1. Procédé d'usinage haute précision de matériaux durs de dentures, notamment de dentures intérieures (3), dans lequel on amène un outil d'usinage haute précision de matériaux durs (W) denté, tournant sur son axe de rotation, en une ou plusieurs passes de profondeur de pénétration radiale différente, dans le cadre d'un mouvement d'avance présentant une composante directionnelle parallèle à l'axe de rotation (C) de la denture usinée et selon un angle des axes (Σ) non nul, en contact d'usinage par développante avec ladite denture usinée, **caractérisé en ce que** l'outil d'usinage haute précision de matériaux durs (W) enlève de la matière de la denture usinée, au moyen d'une région de flanc de dent (4a) abrasive de la denture de l'outil (4) présentant une épaisseur de dent croissante, dans la direction de la ligne de flanc, à partir de sa face (5) tournée vers la denture usinée.

2. Procédé selon la revendication 1, dans lequel la région de flanc de dent (4a) à épaisseur de dent croissante présente, au moins à son commencement, une portion présentant une hauteur de dent croissante.

3. Procédé selon la revendication 1 ou 2, dans lequel la profondeur de pénétration varie entre deux passes dans une mesure telle qu'on ne dépasse pas de plus de 10 % la moitié de la différence d'épaisseur de dent (Δ/2) de la région de flanc de dent servant à l'enlèvement de matière et notamment dans une mesure non supérieure à la moitié de la différence d'épaisseur de dent et/ou non inférieure à 40 %, notamment non inférieure à 30 % de la différence d'épaisseur de dent.

4. Procédé selon l'une des revendications précédentes, dans lequel le rapport entre la différence d'épaisseur de dent et la longueur de la région de flanc de dent servant à l'enlèvement de matière à épaisseur de dent croissante, dans la direction de la ligne de flanc, est d'au moins 1/200, de préférence d'au moins 1/150, plus préférablement d'au moins 1/100 et notamment d'au plus 1/20, de préférence d'au plus 1/30, notamment d'au plus 1/40.

5. Procédé selon l'une des revendications précédentes, dans lequel la longueur de la région de flanc de dent servant à l'enlèvement de matière à épaisseur de dent croissante dans la direction de la ligne de flanc est d'au moins 1×m, de préférence au moins 2×m, plus préférablement d'au moins 4×m et notamment d'au moins 6×m, m étant le module de la denture de l'outil (4).

6. Procédé selon l'une des revendications précédentes, dans lequel une région de flanc de dent (4b) d'épaisseur de dent constante ou décroissante fait suite à la région de flanc de dent à épaisseur de dent croissante dans la direction du flanc de dent.

7. Procédé selon l'une des revendications précédentes, dans lequel une région (4c) à épaisseur de dent décroissante est conçue derrière la région à épaisseur de dent croissante, vu dans le sens de l'avancée, notamment sur la face opposée.

8. Procédé selon l'une des revendications précédentes, comportant une moindre variation de profondeur de pénétration et/ou une moindre vitesse d'avancée lors de la dernière passe, en comparaison de l'avant-dernière passe.

9. Procédé selon l'une des revendications précédentes, comportant un module m de la denture de l'outil mesuré en [mm] qui est d'au moins 0,4, de préférence d'au moins 0,7, notamment d'au moins 1, et/ou d'au plus 8, de préférence d'au plus 6, notamment d'au plus 4.

10. Procédé selon l'une des revendications précédentes, dans lequel l'angle des axes est d'au moins 1°, de préférence d'au moins 2°, notamment d'au moins 3° et/ou d'au plus 45°, de préférence d'au plus 22°, notamment d'au plus 18°.

11. Procédé selon l'une des revendications précédentes, dans lequel le nombre de tours de la pièce à usiner est d'au moins 40, de préférence d'au moins 400, notamment d'au moins 800 tr/min, et/ou d'au plus 7000, de préférence d'au plus 5600, notamment d'au plus 4800 tr/min.

12. Procédé selon l'une des revendications précédentes, dans lequel la vitesse d'avancée en millimètres par rotation de la pièce à usiner dans au moins une et notamment dans plusieurs passes, est d'au plus 0,2, de préférence d'au plus 0,15 et/ou d'au moins 0,01, de préférence d'au moins 0,02, plus préférablement d'au moins 0,04, notamment d'au moins 0,06.

13. Procédé selon l'une des revendications précédentes, dans lequel la surface abrasive, au moins dans une portion de la région de flanc de dent servant à l'enlèvement de matière qui est proche de la face tournée vers la denture usinée, est conçue différemment d'une portion située derrière la région de flanc de dent à épaisseur de dent croissante, en présentant notamment revêtement abrasif de grain plus grossier.

14. Procédé selon l'une des revendications précédentes, dans lequel l'accroissement est de type convexe, notamment avec une courbure allant décroissant à partir de la face tournée vers la denture usinée, sur toute la direction de la ligne de flanc.

15. Machine-outil d'usinage haute précision de matériaux durs de dentures, comportant : un dispositif de serrage rotatif destiné à une pièce à usiner dotée d'une denture destinée à être usinée, notamment une denture intérieure (3) ; un dispositif de serrage entraîné en rotation destiné à un outil d'usinage haute précision de matériaux durs (W) présentant une denture, et comportant des axes de déplacement permettant la réalisation d'un mouvement de pénétration radiale (X) entre la pièce à usiner et l'outil, permettant le mouvement relatif (Z) entre la pièce à usiner et l'outil visant à réaliser le mouvement d'avance présentant une composante directionnelle parallèle à l'axe de rotation de la denture usinée ; et un axe de rotation (A) permettant de régler un angle des axes non nul entre l'axe de l'outil et celui de la pièce, **caractérisée en ce que** la machine-outil présente un dispositif de commande contenant des instructions qui commandent la machine de manière à mettre en œuvre un procédé selon l'une des revendications 1 à 14.

16. Outil d'usinage haute précision de matériaux durs (W) doté d'une denture et susceptible d'être mis en rotation sur son axe de rotation (B), **caractérisé en ce que** ledit outil d'usinage haute précision de matériaux durs (W) présente une région de flanc de dent (4a) abrasive présentant une épaisseur de dent croissante, dans la direction de la ligne de flanc, à partir d'une face qui est tournée vers la denture à usiner lors de l'usinage, et **en ce qu'**il présente notamment les autres particularités énumérées dans les caractéristiques des revendications 2, 4 à 7, 9, 13 et/ou 14.
